# FASCICULE DE BREVET EUROPEEN

(11) **EP 1 503 068 B1**
(45) Date de publication et mention de la délivrance du brevet: **09.09.2009**
(21) Numéro de dépôt: 04291704.7
(22) Date de dépôt: 06.07.2004
(51) Int. Cl.: F02K 1/12, F02K 1/80

(54) **Volet souple de tuyère à section variable de turbomachine**
Nachgiebige Klappe für eine Austrittsdüse einer Turbomaschine mit variablem Querschnitt
Resilient flap for a variable exhaust nozzle of a turbomachine

(30) Priorité: 08.07.2003 FR 0308311
(43) Date de publication de la demande: 02.02.2005
(73) Titulaire: SNECMA, 75015 Paris (FR)
(72) Inventeur: Mandet, Emmanuel, 77830 Echouboulains (FR)
(74) Mandataire: David, Alain

(56) Documents cités:
- EP-A- 0 644 325
- EP-A- 0 715 067
- US-A- 4 637 550
- US-A- 4 662 566
- US-A- 5 000 386
- US-A- 5 215 257
- US-A- 5 680 755

## Description

### Domaine de l'invention

La présente invention se rapporte au domaine général des tuyères à section variable des turbomachines et elle concerne plus particulièrement les tuyères constituées par une couronne de volets.

### Art antérieur

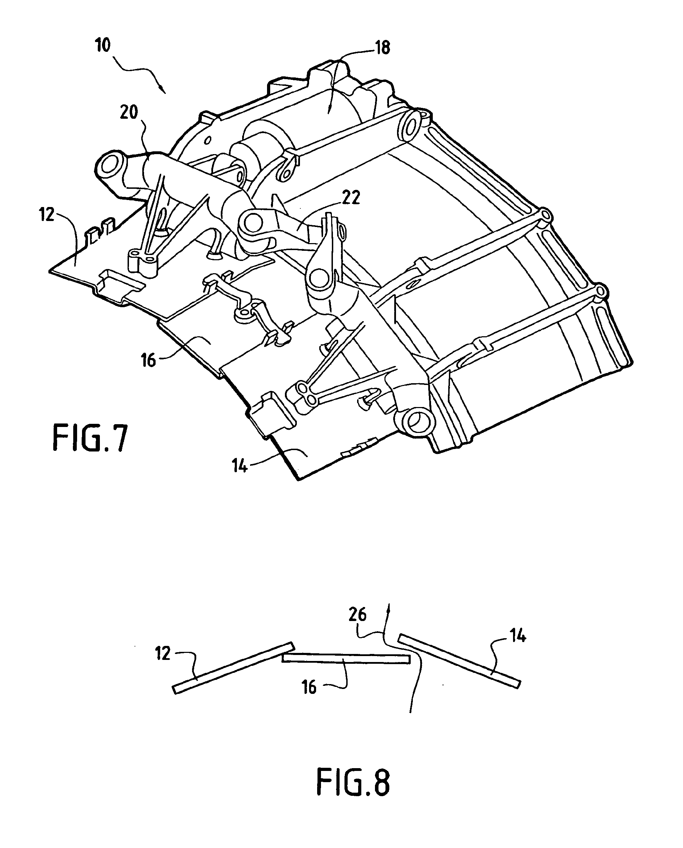

Une architecture conventionnelle de tuyère à section variable 10 de turbomachine est illustrée à la figure 7. Dans ce type d'architecture, il est connu que les tuyères à section variable constituées d'une couronne de volets se composent à la fois de volets commandés 12, 14 et de volets suiveurs 16.

Un tel volet est connu par EP 0 644 325 A1.

Les volets commandés sont actionnés directement par des moyens de commande de façon à modifier le profil du flux primaire du moteur de la turbomachine (i.e. la ou les sections d'éjection selon qu'il s'agit d'un simple convergent ou d'une tuyère convergente/divergente). Selon la configuration envisagée, ces moyens de commande comportent un vérin de commande 18 associé à une cinématique plus ou moins complexe mettant en oeuvre, des leviers 20, des chapes de liaison rotulantes 22 ou encore un anneau, des cames et des galets par exemple.

Les volets suiveurs disposés radialement à l'intérieur des volets commandés prennent appui sur les volets commandés adjacents de part et d'autre de leurs bords longitudinaux et assurent ainsi la continuité (et l'étanchéité) de la veine primaire (d'où l'appellation de volets d'étanchéité donnée aussi à ces volets suiveurs) pendant le fonctionnement de la tuyère et cela quelle que soit sa section d'ouverture.

Selon la précision des moyens de commande, et notamment de sa cinématique, des déformations plus ou moins prononcées apparaissent en fonctionnement, provoquant d'importants décalages dans le braquage des différents volets commandés, c'est à dire dans l'angle que fait chacun de ces volets commandés par rapport à l'axe du moteur.

Il en résulte d'importantes contraintes (flexion/torsion) au niveau des volets suiveurs dont les deux bords longitudinaux (selon l'axe de la tuyère) doivent alors porter sur des génératrices non coplanaires. Or, ces volets suiveurs ne pouvant se déformer suffisamment pour porter sur les deux volets commandés adjacents, notamment lorsqu'ils sont courts et monobloc comme le montre l'exemple de la figure 7, il se crée un phénomène de porte-à-faux au niveau de chacun de ces volets suiveurs, qui entraîne une fuite latérale 26 dans le flux primaire ayant pour conséquence un déficit de performance aérodynamique pour la turbomachine (voir la figure 8).

### Objet et définition de l'invention

La présente invention a donc pour objet de pallier ces inconvénients en proposant une structure de volet suiveur suffisamment souple pour combler les décalages entre les volets commandés. Un but de l'invention est aussi de réaliser un volet suiveur souple capable toutefois de supporter des chargements importants en pression et en température.

Ces buts sont atteints par un volet suiveur souple pour tuyère à section variable de turbomachine interposé entre deux volets commandés adjacents contre lesquels il est maintenu par des moyens d'accrochage, caractérisé en ce qu'il comporte une pluralité de caissons transversaux indépendants montés cote à cote dans une tôle support, les caissons étant en contact par leurs bords longitudinaux relevés et maintenus dans la tôle support par leurs bords latéraux qui sont enserrés dans des bords longitudinaux de la tôle support.

Avec cette structure particulière, on limite pratiquement complètement les fuites entre volets et ainsi que les contraintes associées aux déformations. La durée de vie des volets est augmentée et leur coût de fabrication est réduit.

Les bords longitudinaux de la tôle support enserrant les bords latéraux des caissons définissent une zone d'appui pour les volets commandés adjacents et ils comportent des entailles de calage pour maintenir en position les caissons transversaux, chaque entaille recevant les extrémités des bords longitudinaux relevés de deux caissons adjacents.

Avantageusement, un caisson de ladite pluralité de caissons transversaux comporte en outre une barrette transversale de maintien destinée à supporter le volet suiveur en position de repos. Cette barrette de maintien constitue le bras transversal terminal d'un court montant s'étendant radialement depuis un bord longitudinal dudit caisson transversal.

De préférence, le caisson transversal est un caisson d'extrémité du volet et la tôle support est formée d'une plaque métallique en un matériau relativement souple et résistant à haute température

L'invention concerne également une tuyère à section variable de turbomachine comportant une pluralité de volets suiveurs souples tels que précités.

### Brève description des dessins

Les caractéristiques et avantages de la présente invention ressortiront mieux de la description suivante, faite à titre indicatif et non limitatif, en regard des dessins annexés sur lesquels :
- la figure 1 est une vue en perspective illustrant un volet souple suiveur selon l'invention,
- la figure 2 est une vue en perspective montrant le volet souple suiveur de la figure 1 en appui sur un volet commandé d'une tuyère à section variable,
- la figure 3 est un éclaté du volet souple suiveur de la figure 1,
- la figure 3A illustre un détail du volet souple suiveur de la figure 1,
- les figures 4, 5 et 6 sont des vues illustrant la déformation en fonctionnement du volet souple suiveur de la figure 1,
- la figure 7 est une vue partielle en perspective d'une tuyère à section variable de l'art antérieur, et
- la figure 8 est un schéma illustrant les fuites entre volets existant sur la tuyère de la figure 7.

### Description détaillée d'un mode de réalisation préférentiel

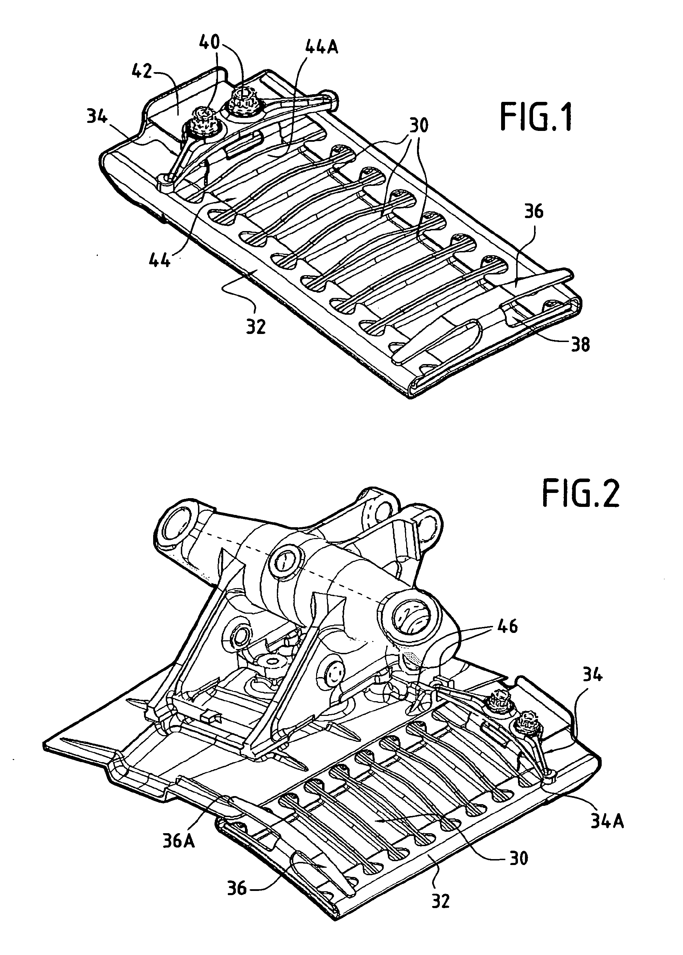

La figure 1 illustre en perspective une structure de volet suiveur conforme à la présente invention. Ce volet qualifié de souple du fait de sa possibilité de déformation comporte plusieurs caissons 30 indépendants maintenus cote à cote dans une tôle support 32 assurant également l'étanchéité de la veine de gaz chauds. Le volet suiveur est relié aux deux volets commandés adjacents par deux barrettes de maintien, l'une amont 34 disposée sensiblement au niveau de son axe d'articulation théorique et destinée à positionner le volet suiveur dans la tuyère et l'autre aval 36 disposée sensiblement au niveau de son extrémité libre, opposée à son axe d'articulation théorique, et destinée à retenir ce volet en position de repos (moteur arrêté).

Chaque caisson 30 présente une forme rectangulaire avec deux bords (ou ailes) longitudinaux 30A (de plus grande longueur) relevés assurant une fonction de raidisseur pour le caisson et deux bords latéraux 30B (de plus faible longueur) rabattus destinés à venir s'emboîter dans la tôle d'étanchéité.

Le nombre des caissons et leur raideur dépendent des caractéristiques recherchées pour la tuyère et notamment ils sont optimisés en fonction de la pression et de la température s'exerçant sur le volet, de ses dimensions, des matériaux utilisés, du porte-à-faux à combler et de la hauteur disponible pour que les extrémités des bords longitudinaux des caissons n'interfèrent pas avec les volets commandés.

Avantageusement, le caisson 38 d'extrémité (c'est à dire celui disposé à l'extrémité libre du volet suiveur) intègre la barrette 36 de maintien aval du volet suiveur. Pour ce faire, le bord longitudinal externe 38A de ce caisson est prolongé en son centre par un court montant vertical 38B s'étendant radialement vers l'extérieur de la tuyère et terminé par un bras transversal cintré 38C formant barrette de maintien. Ce bras de maintien présente une longueur supérieure à la largeur du volet suiveur de sorte que ses deux extrémités 38D peuvent venir en contact sur les deux volets commandés entourant ce volet suiveur.

La tôle d'étanchéité est formée d'une plaque métallique en un matériau relativement souple et résistant à haute température (supérieur à 1000°C) de forme rectangulaire et de dimensions compatibles avec l'espace libre à combler entre deux volets commandés. Plus précisément, le volet suiveur présente une largeur supérieure à celle de cet espace libre, de façon à créer une zone de recouvrement au niveau de chacun de ses deux bords longitudinaux correspondant à une zone d'appui du volet suiveur sur le volet commandé.

Les bords longitudinaux 32A de la tôle d'étanchéité sont recourbés (retournés) pour venir enserrer le bords latéraux rabattus 30B des caissons 30 et ils comportent des entailles 32B réparties régulièrement pour recevoir les extrémités des bords longitudinaux 30A de deux caissons adjacents et ainsi assurer leur maintien conjoint. Les bords longitudinaux 30A contigus de deux caissons adjacents qui assurent la rigidité de ces caissons peuvent ainsi coulisser librement l'un sur l'autre.

Cette configuration du volet permet une complète dissociation des fonctions. En effet, d'une part les caissons constituent la structure du volet et assure sa tenue mécanique vis-à-vis des efforts de pression. Lorsque le volet se vrille, les caissons se déplacent les uns par rapport aux autres et subissent très peu de déformation. Sur l'unique effet des déplacements imposés au volet il n'y a donc quasiment pas de contrainte générée dans les caissons. D'autre part, la tôle assure simplement l'étanchéité entre les caissons en améliorant la géométrie de la veine moteur. Elle permet accessoirement de maintenir les caissons entre eux sur les bords sans assurer aucun rôle structurel.

Le positionnement du volet suiveur par rapport aux deux volets commandés qui l'entoure est assuré par la barrette de maintien amont 34 dont la fixation à la tôle d'étanchéité 32 est effectuée, par exemple, au moyen d'au moins une vis 40. Dans l'exemple illustré, qui n'est aucunement limitatif, cette barrette de maintien est fixée sur un support métallique en forme de pont 42 soudé à une extrémité à la tôle d'étanchéité et venant à l'autre extrémité en appui contre un bord longitudinal 44A d'un premier caisson 44 du volet suiveur, à la manière d'une pince. Bien entendu, tout autre moyen démontable permettant cette fixation rapide du volet dans la tuyère est envisageable.

La figure 2 montre le rattachement du volet suiveur sur un des deux volets commandés qui lui sont adjacents. Il s'effectue d'une part au niveau de la barrette de maintien amont 34 en forme de cintre dont chaque extrémité 34A comportant un ergot cylindrique est maintenue en position entre deux plots 46 disposés sur le bord longitudinal externe du volet commandé et qui encadrent cette extrémité pour en limiter le déplacement latéral (selon l'axe de la tuyère) tout en lui autorisant un déplacement selon deux degrés de liberté (en rotation et en translation longitudinale), et d'autre part au niveau de la barrette de maintien aval 36 dont chaque extrémité 36A repose simplement sur ce bord longitudinal externe du volet commandé. Par cette configuration, les caissons soutiennent l'intégralité de la tôle d'étanchéité et les efforts supportés par le volet peuvent alors être importants.

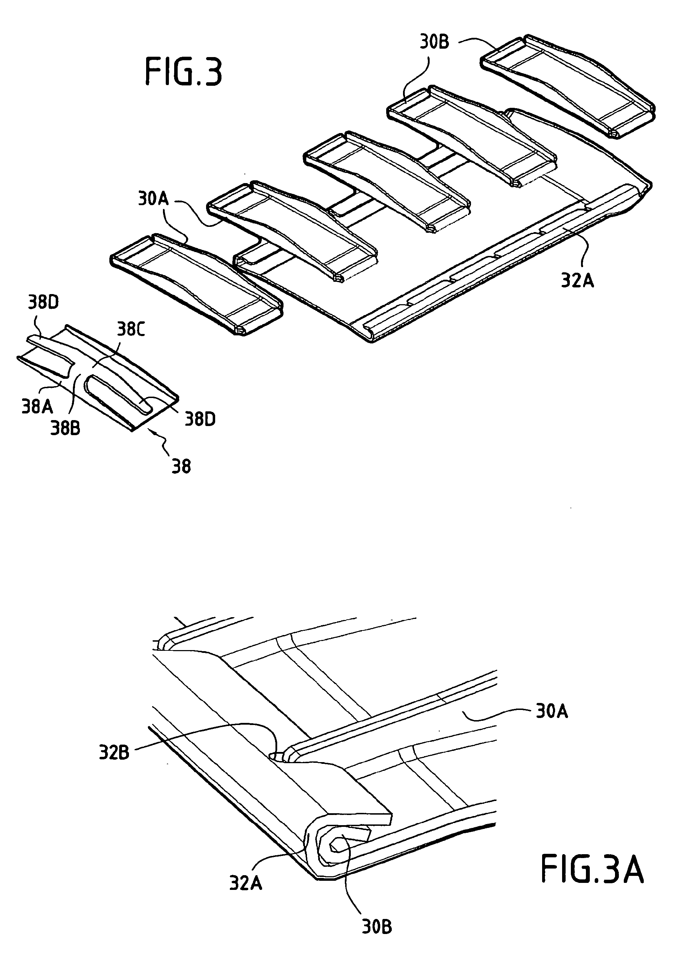

Les figures 3 et 3A illustrent les différentes étapes du montage d'un volet suiveur. Les caissons sont réalisés individuellement à partir de plaques de tôle qui sont pliées pour former les bords rabattus et relevés des caissons, le caisson d'extrémité étant conformé pour intégrer la barrette de maintien aval 36. La tôle d'étanchéité est quant à elle élaborée à partir d'une plaque de tôle dont les bords longitudinaux sont entaillés puis pliés partiellement de façon à recevoir et guider les différents caissons destinés à former le volet. Une fois ceux-ci glissés un à un dans la tôle, les extrémités des bords longitudinaux des différents caissons venant au droit des entailles, le pliage des bords longitudinaux est achevé pour assurer une parfaite fixation de ces caissons, comme illustre la figure 3A. L'ensemble peut ainsi être monté entre deux volets commandés, l'accrochage de ces volets étant ensuite assuré par la fixation de la barrette de maintien amont.

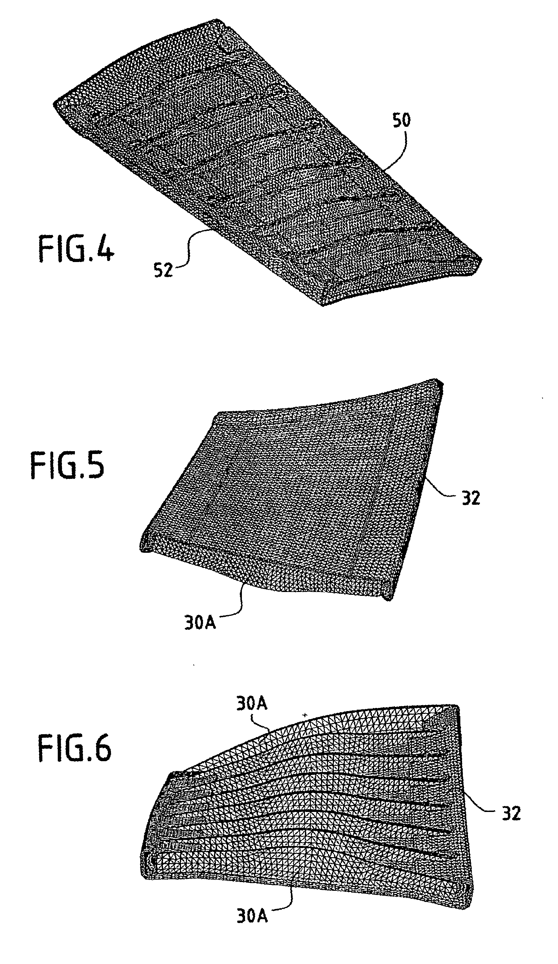

Le fonctionnement du volet suiveur souple selon l'invention est maintenant décrit en regard des figures 4 à 6 qui montrent les déformations subies par ce volet (les barrettes cintrées de maintien ayant été omises pour une meilleure compréhension). En effet, sous l'effet de la pression des gaz chauds éjectés par la tuyère, le volet suiveur se déforme car les appuis des volets commandés adjacents sont décalés. D'un coté, le volet suiveur porte sur un volet commandé selon une génératrice rectiligne 50 alors que de l'autre coté les caissons se déplacent les uns par rapport aux autres pour venir en contact avec l'autre volet commandé décalé 52. Les caissons qui reprennent par leur raideur les efforts de pression sont maintenus par la tôle d'étanchéité. Comme cette tôle est souple, elle suit le mouvement des parties mobiles et se gauchit en venant se plaquer au mieux sur les caissons du volets pour assurer un profil de veine aérodynamique lisse. Ainsi, la flèche que doit atteindre le volet souple est obtenue par un cumul de petits déplacements entre des pièces mobiles (les caissons) et donc sans génération de contraintes dues à la déformation. La durée de vie du volet en est améliorée d'autant.

Ainsi, le volet suiveur souple de l'invention favorise le déplacement entre caissons pour éviter la contrainte dans les pièces du volet. C'est la juxtaposition des caissons qui leur permet d'être libres de bouger entre eux tout en étant contigus. La tôle d'étanchéité est seulement bridée sur ses bords longitudinaux. Soumis à une pression élevée, chaque caisson vient s'appuyer sur les volets adjacents et la tôle alors faiblement chargée vient se plaquer sur les caissons.

Avec cette structure, on répond donc aux besoins antagonistes d'inertie (avec les caissons) et de souplesse (avec la tôle d'étanchéité) et on dissocie les fonctions de tenue en pression et d'étanchéité. Il est en effet réalisé un parfait compromis entre le déplacement relatif entre caissons (pas de contrainte générée) et le niveau de contrainte mécanique résultant des déplacements imposés (effet de torsion du volet). Son application est donc particulièrement recommandée tant aux tuyères à section variable comportant un convergent court que celle munie d'un divergent.

## Revendications

1. Volet suiveur souple (16) pour tuyère à section variable de turbomachine, interposé entre deux volets commandés adjacents (12, 14) contre lesquels il est maintenu par des moyens d'accrochage (34), **caractérisé en ce qu'**il comporte une pluralité de caissons transversaux indépendants (30) montés cote à cote dans une tôle support (32), les caissons étant en contact par leurs bords longitudinaux relevés (30A) et maintenus dans la tôle support par leurs bords latéraux (30B) qui sont enserrés dans des bords longitudinaux (32A) de la tôle support.

2. Volet suiveur souple selon la revendication 1, **caractérisé en ce que** lesdits bords longitudinaux de la tôle support enserrant les bords latéraux des caissons définissent une zone d'appui pour les volets commandés adjacents.

3. Volet suiveur souple selon la revendication 1, **caractérisé en ce que** lesdits bords longitudinaux de la tôle support comportent des entailles de calage pour maintenir en position les caissons transversaux, chaque entaille recevant les extrémités des bords longitudinaux relevés de deux caissons adjacents.

4. Volet suiveur souple selon la revendication 2 ou la revendication 3, **caractérisé en ce qu'**un caisson (38) de ladite pluralité de caissons transversaux comporte en outre une barrette transversale de maintien (36) destinée à supporter le volet suiveur en position de repos.

5. Volet suiveur souple selon la revendication 4, **caractérisé en ce que** ladite barrette de maintien constitue le bras transversal terminal (38C) d'un court montant (38B) s'étendant radialement depuis un bord longitudinal (30A) dudit caisson transversal.

6. Volet suiveur souple selon la revendication 4 ou la revendication 5, **caractérisé en ce que** ledit caisson transversal est un caisson d'extrémité du volet suiveur.

7. Volet suiveur souple selon la revendication 1, **caractérisé en ce que** ladite tôle support est formée d'une plaque métallique en un matériau relativement souple et résistant à haute température.

8. Tuyère à section variable de turbomachine comportant une pluralité de volets suiveurs souples selon l'une quelconque des revendications 1 à 7.

## Claims

1. A flexible follower flap (16) for a variable-section turbomachine nozzle, the flap being interposed between two adjacent controlled flaps (12, 14) against which it is held by fastener means (34), the flap being **characterized in that** it comprises a plurality of independent transverse boxes (30) mounted side by side in a support sheet (32), the boxes being in contact with one another via their raised longitudinal edges (30A) and being held in the support sheet by their lateral edges (30B) which are engaged in longitudinal edges (32A) of the support sheet.

2. A flexible follower flap according to claim 1, **characterized in that** said longitudinal edges of the support sheet engaging the lateral edges of the boxes define respective bearing zones for bearing against the adjacent controlled flaps.

3. A flexible follower flap according to claim 1, **characterized in that** said longitudinal edges of the support sheet include holding notches for holding the transverse boxes in position, each notch receiving the ends of the raised longitudinal edges of two adjacent boxes.

4. A flexible follower flap according to claim 2 or claim 3, **characterized in that** one of the boxes (38) of said plurality of transverse boxes further comprises a transverse holder strip (36) for holding the follower flap in a rest position.

5. A flexible follower flap according to claim 4, **characterized in that** said holder strip constitutes the terminal transverse arm (38C) of a short upright (38B) extending radially from a longitudinal edge (30A) of said transverse box.

6. A flexible follower flap according to claim 4 or claim 5, **characterized in that** said transverse box is an end transverse box of the follower flap.

7. A flexible follower flap according to claim 1, **characterized in that** said support sheet is constituted by a metal plate of a material that is relatively flexible and that withstands high temperatures.

8. A variable-section turbomachine nozzle including a plurality of flexible follower flaps according to any one of claims 1 to 7.

## Patentansprüche

1. Flexible Folgeklappe (16) für eine Turbomaschinendüse mit variablem Querschnitt, welche zwischen zwei benachbarten gesteuerten Klappen (12, 14) eingefügt ist, an denen sie mit Hilfe von Einhängmitteln (34) gehalten ist, **dadurch gekennzeichnet, daß** sie eine Vielzahl von unabhängigen querverlaufenden Kassetten (30) aufweist, die nebeneinander in einem Tragblech (32) angebracht sind, wobei die Kassetten über ihre erhöhten Längskanten (30A) in Kontakt sind und durch ihre Seitenkanten (30B), die in Längskanten (32A) des Tragblechs eingespannt sind, in dem Tragblech gehalten sind.

2. Flexible Folgeklappe nach Anspruch 1, **dadurch gekennzeichnet, daß** die Längskanten des Tragblechs, welche die Seitenkanten der Kassetten einschließen, einen Anlagebereich für die benachbarten gesteuerten Klappen bilden.

3. Flexible Folgeklappe nach Anspruch 1, **dadurch gekennzeichnet, daß** die Längskanten des Tragblechs Festklemmkerben aufweisen, um die Querkassetten in Position zu halten, wobei jede Kerbe die Enden der erhöhten Längskanten von zwei benachbarten Kassetten aufnehmen.

4. Flexible Folgeklappe nach Anspruch 2 oder Anspruch 3, **dadurch gekennzeichnet, daß** eine Kassette (38) der Vielzahl von Querkassetten ferner einen querverlaufenden Haltesteg (36) aufweist, welcher dazu bestimmt ist, die Folgeklappe in der Ruhestellung zu halten.

5. Flexible Folgeklappe nach Anspruch 4, **dadurch gekennzeichnet, daß** der Haltesteg den abschließenden Querarm (38C) einer von einer Längskante (30A) der Querkassette aus radial verlaufenden kurzen Strebe (38B) bildet.

6. Flexible Folgeklappe nach Anspruch 4 oder Anspruch 5, **dadurch gekennzeichnet, daß** die Querkassette eine Endkassette der Folgeklappe ist.

7. Flexible Folgeklappe nach Anspruch 1, **dadurch gekennzeichnet, daß** das Tragblech von einer Metallplatte aus einem relativ flexiblen und hochtemperaturbeständigen Material gebildet ist.

8. Turbomaschinendüse mit variablem Querschnitt, die eine Vielzahl von flexiblen Folgeklappen nach einem der Ansprüche 1 bis 7 umfaßt.
